**Europäisches Patentamt**

**European Patent Office**

**Office européen des brevets**

(1) Publication number: **0 277 196**

**B1**

## EUROPEAN PATENT SPECIFICATION

(45) Date of publication of patent specification: **10.10.90**

(51) Int. Cl.⁵: **B 41 M 5/26,** B 41 M 5/00

(21) Application number: **87905411.2**

(22) Date of filing: **11.08.87**

(86) International application number:
**PCT/US87/01950**

(87) International publication number:
**WO 88/01236 25.02.88 Gazette 88/05**

(54) METHOD OF MAKING A TWO PLY THERMAL PAPER.

(30) Priority: **14.08.86 US 896495**

(43) Date of publication of application:
**10.08.88 Bulletin 88/32**

(45) Publication of the grant of the patent:
**10.10.90 Bulletin 90/41**

(84) Designated Contracting States:
**DE FR GB**

(56) References cited:
**none**

(73) Proprietor: **NCR CORPORATION**
**World Headquarters**
**Dayton, Ohio 45479 (US)**

(72) Inventor: **OBRINGER, Thomas, John**
**845 Kenbrook Drive**
**Vandalia, OH 45377 (US)**
Inventor: **SIEGEL, Louis, Francis**
**2150 Delvue Drive**
**Dayton, OH 45459 (US)**
Inventor: **LEWIS, Maurice, Wendell**
**1643 Earlham Drive**
**Dayton, OH 45406 (US)**

(74) Representative: **Robinson, Robert George**
**International Patent Department NCR Limited**
**206 Marylebone Road**
**London NW1 6LY (GB)**

**Description**

Technical Field

The present invention relates to a method of making a two ply thermal paper.

Background Art

In the field of thermal printing, it is well-known that a significant limitation in the printing operation is the absence of copies during such printing operation. The early thermal printing systems used a thermal print element energized to heat specific and precise areas of a heat-sensitive paper or like record material and thereby produce readable characters on the single sheet of paper. In this respect, the single sheet of paper includes material which is reactive to the applied heat and is described as a self-contained system.

More recently, thermal printing systems have included two separate sheets of paper or like record material, wherein each sheet is coated with a heat-sensitive reactive material. The top or front sheet is usually a light weight tissue-type paper which is coated with a heat-sensitive material and the second sheet is preferably bond-type paper which is also coated with a sensitive material. The two sheets are then mated or collated in a manner wherein the uncoated side of the tissue paper is in contact with the coating on the bond paper. The coated side of the thermal printing elements, or in certain applications, the elements may be in actual contact with the tissue paper. The thermal elements are actuated to provide specific and precise marking or imaging on the papers in the process which enables the obtaining of a master sheet plus a readable copy.

Alternatively, the tissue paper could be coated on both the front and back sides so that the thermal printing elements are adjacent or in contact with the front coated side of the tissue paper and the back coating is in contact with the bond paper. In similar manner, the thermal elements are actuated to provide the specific and precise marking or imaging on the two papers so as to be in readable form. The tissue sheet and the bond sheet are arranged in manifold manner and the imaging is accomplished by transfer of the ink or like material in the coating onto the bond sheet.

A multilayer heat-sensitive recording material is disclosed in Japanese Patent Application No. 68871/74. This material is obtained by laminating recording sheets consisting of a support and a heat-sensitive layer via a wax layer. The coated sheets are pressed together then passed through a calendar roller. Printing is carried out on the multi-layer recording material by means of a thermal printer and the sheets are thereafter separated.

Disclosure of the Invention

It is an object of the invention to provide a laminated heat-sensitive material which is simpler to produce and requires fewer operating steps than the method of the above mentioned Japanese reference.

Thus, according to the invention, there is provided a method of making a two ply thermal paper including the steps of coating a base sheet with a thermoreactive layer including color forming ingredients and a polyvinyl alcohol binder, and laminating said base sheet with a top sheet, characterized by the steps of laminating an uncoated top sheet to said base sheet immediately following the application of the coating to said base sheet and while the coating is in a wet condition, drying the so obtained laminate, and thereafter coating said top sheet with a thermoreactive layer including color forming ingredients and a polyvinyl alcohol binder.

In the preferred embodiment, the top or front record sheet is a tissue or translucent type paper and the bottom or back record sheet is a bond or like paper. The coating material is sandwiched between the uncoated tissue and the front surface of the bond sheet and provides the adhering means for the two sheets. A coating is then applied to the front surface of the top or front sheet as a part of the single continuous laminating operation.

The two sheets are imaged by use of thermal printing elements being placed in extremely close proximity or in actual contact with the front side of the tissue sheet and heat emitted from such printing elements is transferred through the tissue sheet and onto the bond sheet resulting in a heating of the coating on the front side of the bond sheet along with heating of the coating on the tissue sheet, and thereby producing an image or mark on both sheets. The image can be read from the front of both sheets in normal manner.

Brief Description of the Drawings

An embodiment of the present invention will now be described, by way of example, with reference to the accompanying drawings, in which:

Fig. 1 is a diagrammatic view of the thermal copy system produced by the method of the present invention, and

Fig. 2 is a diagrammatic view of the method of preparing the two ply thermal paper.

Best Mode for Carrying Out the Invention

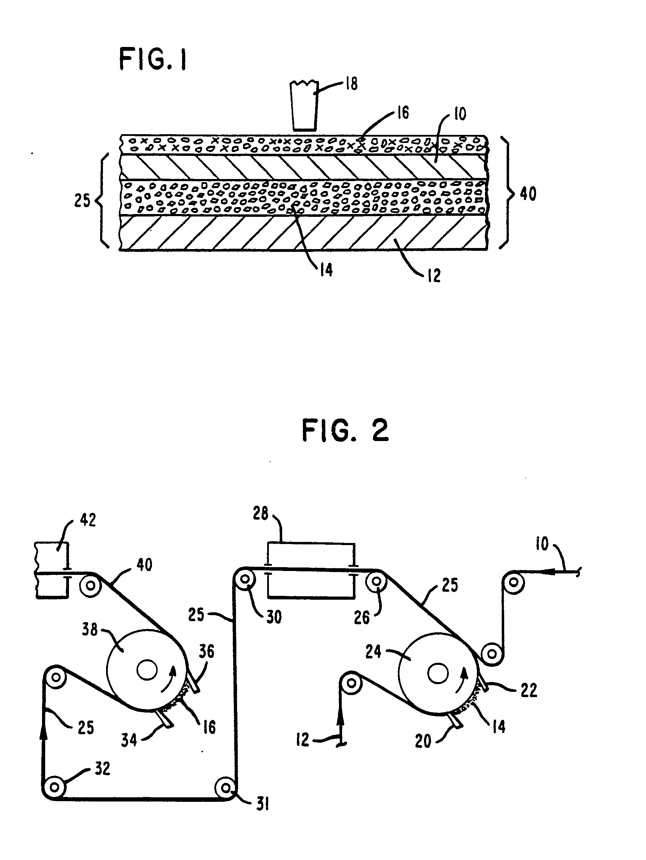

Fig. 1 illustrates in diagrammatic form the concept of the present invention wherein a front or top tissue-type sheet 10 is collated with a back or bottom bond-type sheet 12. A thermoreactive coating 14 is provided on the sheet 12 and is sandwiched between the two sheets and the imaging technique is accomplished during heating of a thermoreactive coating 16 on the front surface of the sheet 10 and heating of the coating 14 on the front surface of the bond sheet 12.

The present invention provides for applying and using the thermoreactive coating 14 on the bond sheet 12 as an adhering agent for laminating the sheet 10 to the sheet 12.

Example I

Example I describes the materials for use with the method wherein the coating 14 of thermochromic material is applied to the front side of the bond sheet 12 and such sheet is laminated with the tissue sheet 10 so that the coating material 14 is sandwiched between the back surface of the tissue sheet 10 and the front surface of the bond sheet 12, as illustrated in Fig. 1. The two sheets 10 and 12 are then imaged by use of heat from a plurality of thermal elements such as 18, wherein the coating 14 and the coating 16 provide for a two ply record medium consisting of the sheets 10 and 12.

Coating Composition

The thermoreactive coating formulation 14 for the base sheet 12 essentially consists of a thermochromic dye, a phenolic resin, one or more waxes, and a binder. A preferred coating composition utilizing blue dye for blue print is as follows:

### Base Coat

| Material | Percent Dry Weight | Range |
|---|---|---|
| Dye (Blue) | 10.0% | 8-12% |
| PVA | 15.0 | 10-20 |
| Nopco NDW | 0.5 | 0-1 |
| Niaproof 08 | 0.5 | 0-1 |
| Bisphenol | 27.0 | 20-35 |
| Behenyl Alcohol | 13.2 | 10-15 |
| Ansilex Clay | 31.8 | 25-35 |
| Tinopal PT | 1.3 | 1-2 |

The coating below is coated onto sheet 10 on the second pass of the operation after lamination of the top ply or sheet 10 to the bottom ply or sheet 12. This coating provides the image for the top sheet 10.

### Top Coat

| Material | Percent Dry Weight | Range |
|---|---|---|
| Dye (Black) | 5.9% | 5-7% |
| Dye (Blue) | 0.1 | 0-0.2 |
| PVA | 15.0 | 10-20 |
| Nopco NDW | 0.5 | 0-1 |
| Niaproof 08 | 0.4 | 0-1 |
| Calgon | 0.4 | 0-1 |
| Bisphenol | 22.2 | 18-25 |
| Acrawax C | 12.0 | 10-15 |
| Armid HT | 5.0 | 4-6 |
| Ansilex Clay | 33.9 | 28-40 |
| Titanium Dioxide | 2.6 | 1-4 |
| Zinc Stearate | 2.0 | 1-3 |

3

### Example II

Example II describes the materials for use with the method wherein the coating 14 of thermochromic material is applied to the front side of the bond sheet 12, using black dye.

### Coating Composition

The thermoreactive coating formulation 14 for the base sheet 12 essentially consists of a thermochromic dye, a phenolic resin, one or more waxes, and a binder. A preferred coating composition utilizing black dye for black print is as follows:

### Base Coat

| Material | Percent Dry Weight | Range |
|---|---|---|
| Dye (Black) | 10.0% | 8-12% |
| PVA | 10.6 | 9-13 |
| Nopco NDW | 0.5 | 0-1 |
| Niaproof 08 | 0.5 | 0-1 |
| Bisphenol | 42.7 | 37-48 |
| P-Benzyl Biphenyl | 17.6 | 14-21 |
| Armoslip 18 | 8.8 | 7-10 |
| Ansilex Clay | 8.8 | 7-10 |
| Tinopal PT | 0.4 | 0-1 |

The formulation for the top coat 16 is the same as that recited in Example I above.

It is to be noted that while blue dye has been reasonably satisfactory in providing an acceptable imaging of the two ply thermal paper systems, the black dye provides better environmental stability (resistance to fading) and is considered to be the preferred composition.

Fig. 2 illustrates the method by which the top sheet 10 is laminated with the base sheet 12 with the wet coating 14 therebetween. The top sheet 10 is collated with the base sheet 12 in a single operation, immediately following (0.1 to 0.5 seconds) application of the coating 14 by an applicator 20, and spreading of the coating 14 evenly by suitable means such as a doctor blade 22. The two sheets may then be rolled by means of a roller 24 to eliminate wrinkles and secure alignment of the two sheets together in a laminated manner. The wet or like thermally reactive coating 14 serves as an adhesive to laminate the two sheets 10 and 12 which in such condition are trained over a roller 26 and dried in a dryer 28.

The thermally reactive coating 14 is applied to the base sheet 12, and the overlay sheet 10 is applied to the base sheet 12 by the arrangement of Fig. 2, wherein the laminate is then dried and also may be calendered. The coating 144 is in the range of 1360 to 2270 grams dry weight per ream on paper 12 and the coating 16 is in the range of 230 to 910 grams dry weight per ream on paper 10. Calendering enhances the bond of the overlay sheet 10 to the support sheet 12 and increases the quality of the developed image. The process of coating by means of the applicator 20, as shown in Fig. 2, may include blade coater application, kiss roll, extrusion application, gravure, or air knife application.

The two ply thermal paper, indicated as 25 and consisting of the bond sheet 12, the coating 14 and the tissue sheet 10, after drying thereof, is directed around rollers 30, 31 and 32 to a station for coating the top sheet 10. The coating 16 is applied to the top ply 10 of the thermal paper 25 by an applicator 34 and is evenly spread by a doctor blade 36 as the paper 25 is trained around a roller 38 to complete the formation of the thermal paper 40. The paper 40 is then directed through a dryer 42 for drying the top coating 16, and then calendered.

The various ingredients utilized in the thermally reactive coating are further identified and are available from the noted sources. The polyvinyl alcohol (PVA) is available from Air Products Corporation; and the bisphenol (4,4-isopropylidenediphenol), as a reactive material of the phenol group, is available from Dow Chemical Company. The blue color forming dye is of the leuco group and is available from Hilton-Davis Company and the black color forming dye of the fluoran group is Pergascript from Ciba-Geigy Corporation of S205 from Yamada Chemical Company. The Behenyl Alcohol is a saturated fatty alcohol used as a temperature modifier and is available from Fallek Chemical Company, the Acrawax C is a synthetic wax and is available fom Glyco Inc., and the amide wax is Armid HT or Armoslip 18 from Armour Chemical Company. The filler may be calcium carbonate supplied by Georgia Marble Company, or the filler may be Ansilex clay supplied by Engelhard Corporation. Nopco NDW is a defoamer of the glycol group and is available from Diamond Shamrock Corp., Niaproof 08 is a sodium 2-ethylhexyl sulfate used as a wetting agent and is available from Niacet Corp. and Calgon is sodium hexametaphosphate from Calgon Corporation. Tinopal PT is a fluorescent brightener available from Ciba-Geigy Corporation. The P-Benzyl Biphenyl is a hydroxy cyclic compound used as a temperature modifier in a lower temperature range than the Behenyl Alcohol and is available from Nagase America Corporation. The titanium dioxide is a white pigment available from N. L. Industries (National Lead Corporation), and the zinc stearate is used as an anti-stick agent and is available from Witco Chemical Company.

The polyvinyl alcohol binder in the coating provides a low cost and tackified formulation for the coatings in producing a two copy system. The process of wet lamination provides for maintaining contact of the two sheets during the printing operation, and permitting ease of separation of the sheets after printing.

## Claims

1. A method of making a two ply thermal paper including the steps of coating a base sheet with a thermoreactive layer including color forming ingredients and a polyvinyl alcohol binder, and laminating said base sheet with a top sheet, characterized by the steps of laminating an uncoated top sheet to said base sheet immediately following the application of the coating top said base sheet and while the coating is in a wet condition, drying the so obtained laminate, and thereafter coating said top sheet with a thermoreactive layer including color forming ingredients and a polyvinyl alcohol binder.

2. A method according to claim 1, characterized in that said top sheet is laminated to said base sheet within 0.1 and 0.5 seconds from application of the coating to said base sheet.

3. A method according to either claim 1 or 2, characterized in that laminating of said top and base sheets and coating of said top sheet are carried out in a single continuous operation.

4. A method according to claim 1, characterized in that said base sheet is bond paper.

5. A method according to claim 1, characterized in that said top sheet is tissue paper.

6. A method according to claim 1, characterized in that the thermoreactive coating for the base sheet includes a color forming dye, a fatty acid, a bisphenol, a filler, and a binder of polyvinyl alcohol.

7. A method according to claim 1, characterized in that the coating for the base sheet essentially consists of a thermochromic dye of about 8—12%, a bisphenol of about 20—35%, a fatty acid of about 10—15%, and a filler of about 25—35%, all by dry weight, and mixed in a binder of about 10—20% polyvinyl alcohol.

8. A method according to claim 1, characterized in that the coating for the base sheet essentially consists of a thermochromic dye of about 8—12%, a bisphenol of about 38—48%, a fatty acid of about 15—20%, a wax of about 7—10%, and a filler of about 7—10%, all by dry weight, and mixed in a binder of about 10—15% polyvinyl alcohol.

9. A method according to claim 1, characterized in that the coating on the top sheet essentially consists of a thermochromic dye of about 5—7%, a bisphenol of about 18—25%, a wax of about 10—20%, and a filler of about 28—40%, all by dry weight, and mixed in a binder of about 10—20% polyvinyl alcohol.

## Patentansprüche

1. Verfahren zum Herstellen eines zweischichtigen Thermopapiers mit den Schritten Beschichten eines Basisblattes mit einer thermoreaktiven Schicht, die farbbildende Bestandteile und ein Polyvinylalkohol-Bindemittel aufweist, und Laminieren des Grundblattes mit einem Deckblatt, gekennzeichnet durch die Schritte Laminieren eines unbeschichteten Deckblattes auf das Basisblatt unmittelbar nach der Aufbringung der Beschichtung auf das Basisblatt und während die Beschichtung in einem Feuchtzustand ist, Trocknen des so erhaltenen Laminats und danach Beschichten des Deckblattes mit einer thermoreaktiven Schicht, die farbbildende Bestandteile und ein Polyvinylalkohol-Bindemittel aufweist.

2. Verfahren nach Anspruch 1, dadurch gekennzeichnet, daß das Deckblatt auf das Basisblatt innerhalb von 0,1 bis 0,5 Sekunden nach Aufbringen der Beschichtung auf das Basisblatt laminert wird.

3. Verfahren nach Anspruch 1 oder 2, dadurch gekennzeichnet, daß das Laminieren des Deck- und Basisblattes und das Beschichten des Basisblattes in einem einzigen kontinuierlichen Vorgang durchgeführt wird.

4. Verfahren nach Anspruch 1, dadurch gekennzeichnet, daß das Basisblatt ein Feinpapier ist.

5. Verfahren nach Anspruch 1, dadurch gekennzeichnet, daß das Deckblatt ein Seidenpapier ist.

6. Verfahren nach Anspruch 1, dadurch gekennzeichnet, daß die thermoreaktive Beschichtung für das Basisblatt einen Farbbildner-Farbstoff, eine Fettsäure, ein Bisphenol, einen Füllstoff und ein Bindemittel von Polyvinylalkohol aufweist.

7. Verfahren nach Anspruch 1, dadurch gekennzeichnet, daß die Beschichtung für das Basisblatt im wesentlichen besteht aus etwa 8—12% thermochromem Farbstoff, etwa 20—35% Bisphenol, etwa 10—15% Fettsäure und etwa 25—35% Füllmittel, jeweils Trockengewicht und gemischt in einem Bindemittel von etwa 10—20% Polyvinylalkohol.

8. Verfahren nach Anspruch 1, dadurch gekennzeichnet, daß die Beschichtung des Basisblattes im wesentlichen besteht aus etwa 8—12% thermochromem Farbstoff, etwa 38—48% Bisphenol, etwa 15—20% Fettsäure, etwa 7—10% Wachs und etwa 7—10% Füllmittel, jeweils Trockengewicht und gemischt in einem Bindemittel von etwa 10—15% Polyvinylalkohol.

9. Verfahren nach Anspruch 11, dadurch gekennzeichnet, daß die Beschichtung des Deckblattes im wesentlichen besteht aus etwa 5—7% thermochromem Farbstoff, etwa 18—25% Bisphenol, etwa 10—20% Wachs und etwa 28—40% Füllmittel, jeweils Trockengewicht und gemischt in einem Bindemittel von etwa 10—20% Polyvinylalkohol.

**Revendications**

1. Procédé de fabrication d'un papier thermosensible à deux épaisseurs comprenant les étapes qui consistent à revêtir une feuille de base d'une couche thermoréactive comprenant des ingrédients de formation de couleur et un liant à l'alcool polyvinylique, et à stratifier ladite feuille de base avec une feuille supérieure, caractérisé par les étapes qui consistent à stratifier une feuille supérieure non revêtue sur ladite feuille de base immédiatement après l'application du revêtement sur ladite feuille de base et, pendant que le revêtement est dans un état humide, à sécher le stratifié ainsi obtenu, puis à revêtir ladite feuille supérieure d'une couche thermoréactive comprenant des ingrédients de formation de couleur et un liant à l'alcool polyvinylique.

2. Procédé selon la revendication 1, caractérisé en ce que ladite feuille supérieure est stratifiée sur ladite feuille de base entre 0,1 et 0,5 seconde après l'application du revêtement sur ladite feuille de base.

3. Procédé selon la revendication 1 ou 2, caractérisé en ce que la stratification desdites feuilles supérieure et de base et le revêtement de ladite feuille supérieure sont effectués en une seule opération continue.

4. Procédé selon la revendication 1, caractérisé en ce que ladite feuille de base est un papier pour titres.

5. Procédé selon la revendication 1, caractérisé en ce que ladite feuille supérieure est en papier de soie.

6. Procédé selon la revendication 1, caractérisé en ce que le revêtement thermoréactif pour la feuille de base comprend un colorant de formation de couleur, un acide gras, un bisphénol, une charge et un liant à l'alcool polyvinylique.

7. Procédé selon la revendication 1, caractérisé en ce que le revêtement pour la feuille de base est constitué essentiellement d'environ 8 à 12% d'un colorant thermochrome, d'environ 20 à 35% de bisphénol, d'environ 10 à 15% d'un acide gras et d'environ 25 à 35% d'une charge, tous en poids à sec, et en mélange dans environ 10 à 20% d'un liant à l'alcool polyvinylique.

8. Procédé selon la revendication 1, caractérisé en ce que le revêtement pour la feuille de base est constitué essentiellement d'environ 8 à 12% d'un colorant thermochrome, d'environ 38 à 48% d'un bisphénol, d'environ 15 à 20% d'un acide gras, d'environ 7 à 10% d'une cire et d'environ 7 à 10% d'une charge, tous en poids à sec, et en mélange dans environ 10 à 15% d'un liant à l'alcool polyvinylique.

9. Procédé selon la revendication 1, caractérisé en ce que le revêtement sur la feuille supérieure est constitué essentiellement d'environ 5 à 7% d'un colorant thermochrome, d'environ 18 à 25% d'un bisphénol, d'environ 10 à 20% d'une cire et d'environ 28 à 40% d'une charge, tous en poids à sec, et en mélange dans environ 10 à 20% d'un liant à l'alcool polyvinylique.

# FIG. I

# FIG. 2

1